# EUROPÄISCHE PATENTANMELDUNG

(11) **EP 3 251 768 A1**
(43) Veröffentlichungstag der Anmeldung: **06.12.2017**
(21) Anmeldenummer: 17173651.5
(22) Anmeldetag: 31.05.2017
(51) Int. Cl.: B21C 23/00, B22D 17/00, B22D 17/20, C22C 1/00

(54) **VERFAHREN ZUR HERSTELLUNG EINES PROFILS AUS EINER METALLLEGIERUNG**

(30) Priorität: 31.05.2016 AT 504912016
(71) Anmelder: LKR Leichtmetallkompetenzzentrum Ranshofen GmbH, 5282 Ranshofen (AT)
(72) Erfinder: Kilian, Helmut, 5233 Pischelsdorf (AT); Gneiger, Stefan, 4300 St. Valentin (AT); Simson, Clemens, 5230 Mattighofen (AT)
(74) Vertreter: Wirnsberger & Lerchbaum Patentanwälte OG

(57) **Zusammenfassung**

Die Erfindung betrifft ein Verfahren zur Herstellung eines Profils (1) aus einer Metalllegierung, wobei die Metalllegierung im teilflüssigen Zustand verarbeitet wird, wobei die insbesondere in Form von Spänen vorliegende Metalllegierung mit einem Extruder (E) kontinuierlich extrudiert wird, wobei kohlenstoffbasierte Zusatzstoffe eingearbeitet werden.

## Beschreibung

Die Erfindung betrifft ein Verfahren zur Herstellung eines Profils aus einer Metalllegierung, wobei die Metalllegierung im teilflüssigen Zustand verarbeitet wird.

Für die Herstellung von Halbzeugen oder Werkstücken aus Metallen oder Legierungen sind verschiedene Gießverfahren wie das Stranggießen oder der Kokillenguss bekannt. Insbesondere Komponenten aus Leichtmetallen werden häufig auch endabmessungsnah im Druckguss erstellt, wobei eine Schmelze in eine Kavität gegossen wird. In jüngerer Zeit sind im weiteren Zusammenhang damit auch Verfahren entwickelt worden, bei welchen das zu verarbeitende Material in einen teilflüssigen Zustand gebracht und in diesem Zustand verarbeitet bzw. in eine Kavität gegossen wird, um ein Werkstück auszubilden. Hierfür werden Legierungen in der Regel auf eine Temperatur gebracht, die zwischen der Soliduskurve und der Liquiduskurve liegt, sodass im verarbeiteten Material sowohl feste als auch flüssige Phasenanteile vorliegen. Die Verarbeitung von teilflüssigem Material unter Einbringung einer Scherung führt zu einem rundlich eingeformten Gefüge, wodurch üblicherweise auch gute Materialkennwerte erreicht werden.

Bei den bekannten Verfahren zur Verarbeitung von Material im teilflüssigen bzw. semisolid Zustand handelt es sich um Thixomolding-Verfahren. Dabei wird ein Granulat einer Metalllegierung in einem Barrel mit einer Schnecke teilweise aufgeschmolzen und mit der Schnecke einer Scherbeanspruchung unterworfen, um das Material in einen thixotropen Zustand zu bringen. Anschließend wird das Material in eine Form bzw. Kavität eingespritzt, indem mit der Schnecke ein axialer Hub ausgeführt wird. Wenngleich mit einem Thixomolding-Verfahren Bauteile endabmessungsnah hergestellt werden können, ist die Technologie aufwendig, weil die Kavitäten gegenüber dem Barrel nach jedem Einspritzvorgang dicht sein müssen, bis der nächste Einspritzvorgang folgt. Insbesondere ist eine kontinuierliche Herstellung eines Stranges oder dergleichen nicht möglich.

Aufgabe der Erfindung ist es, ein Verfahren der eingangs genannten Art anzugeben, mit welchem es möglich ist, Späne, Granulat oder dergleichen aus einer Metalllegierung in nur einem Schritt zu einem festen oder halbfesten Vormaterial zu verarbeiten und zudem eine hohe Umformbarkeit aufweist.

Diese Aufgabe wird erfindungsgemäß dadurch gelöst, dass bei einem Verfahren der eingangs genannten Art die insbesondere in Form von Spänen vorliegende Metalllegierung mit einem Extruder kontinuierlich extrudiert wird, wobei kohlenstoffbasierte Zusatzstoffe eingearbeitet werden.

Ein mit der Erfindung erzielter Vorteil ist insbesondere darin zu sehen, dass bei einem Extrusionsverfahren im Zweiphasengebiet hohe Festphasenanteile verarbeitet werden können. Es werden somit die Vorteile einer Verarbeitung im thixotropen Zustand mit den Vorteilen einer kontinuierlichen Verfahrensführung kombiniert. Durch die dadurch ermöglichte Zuführung von kohlenstoffbasierten Zusatzstoffen wird zudem eine Umformfähigkeit des durch das erfindungsgemäße Verfahren hergestellten Profils erhöht. Die kohlenstoffbasierten Zusatzstoffe sind insbesondere als Partikel ausgebildet. Die Späne und kohlenstoffbasierten Zusatzstoffe werden in nur einem Schritt unter Aufbringung von Scherkräften kontinuierlich zu einem Profil verarbeitet. Das Profil kann dabei fest oder halbfest bzw. nicht vollständig erstarrt hergestellt werden, wobei zur Erzeugung einer erhöhten Umformfähigkeit insbesondere Grafit oder Graphen eingearbeitet wird. Ein hergestelltes Profil kann beispielsweise ohne weitere Vorbereitung weiter umgeformt werden, wobei das Profil einem Umformprozess zugeführt wird. Darüber hinaus kann ein hergestelltes Profil als Zusatz für weitere Werkstoffgruppen verwendet werden. Beispielsweise kann eine Magnesiumlegierung zusammen mit Grafit extrudiert und das dadurch hergestellte Profil kann einer höherfesten Aluminiumlegierung zugegeben werden. Eine solche höherfeste Aluminiumlegierung kann in weiterer Folge mit größerer Geschwindigkeit bei gleichbleibender Qualität verpresst werden. Selbiges gilt für andere höherfeste Legierungen, welchen ein durch ein erfindungsgemäßes Verfahren hergestelltes Profil bzw. Teile davon zugegeben wurden. Somit ist eine Wirtschaftlichkeit von hoch- und höherfesten Legierungen erhöht. Das als halbfest oder fest ausgebildete Profil wird folglich als Vormaterial weiterverwendet, wodurch auch in ein Endprodukt kohlenstoffbasierte Zusatzstoffe eingebracht werden. Es können Profile mit unterschiedlich hohen Festphasenanteilen hergestellt werden, abhängig davon, ob ein halbfestes oder festes Profil hergestellt wird. Bei einer Herstellung eines halbfesten Profils werden z. B. Festphasenanteile zwischen 2 % und 30 %, insbesondere zwischen 5 % und 35 %, besonders bevorzugt zwischen 8 % und 50 %, verarbeitet. Bei der Herstellung eines festen Profils werden hingegen beispielsweise Festphasenanteile zwischen 70 % und 97 %, insbesondere zwischen 65 % und 95 %, besonders bevorzugt zwischen 60 % und 90 %, verarbeitet.

Es können beliebige kohlenstoffbasierte Zusatzstoffe, welche insbesondere als Partikel ausgebildet sind, zusammen mit den Spänen aus einer Metalllegierung verarbeitet werden. Es versteht sich, dass die Metalllegierung in einer anderen Form vorliegen kann, beispielsweise als Granulat. Die kohlenstoffbasierten Zusatzstoffe wie Grafit oder Graphen werden dabei entweder unmittelbar im Prozess zugeführt oder schon vor Prozessbeginn mit den Spänen oder dem Granulat aus einer Metalllegierung vermischt und anschließend als Gemisch in den Prozess eingeführt. Die Späne können insbesondere aus einer Magnesiumlegierung oder einer Zinklegierung gebildet sein.

Es ist von Vorteil, wenn die Metalllegierung und die kohlenstoffbasierten Zusatzstoffe durch zumindest eine in einem Zylinder angeordnete Schneckenwelle bearbeitet werden, wobei ein entstehendes teilflüssiges Material über die zumindest eine Schneckenwelle zu einer Matrize transportiert wird. Insbesondere werden Späne aus einer Metalllegierung und die insbesondere als Partikel ausgebildeten kohlenstoffbasierten Zusatzstoffe von oben über einen Trichter dem Zylinder mit der Schneckenwelle zugeführt, wo diese in einen thixotropen Zustand gebracht und verarbeitet werden. Besonders bevorzugt werden die kohlenstoffbasierten Zusatzstoffe direkt im Trichter den Spänen zugeführt und anschließend in den Zylinder dosiert, wo diese in die Späne eingearbeitet werden. Die Schneckenwelle ist insbesondere konisch ausgebildet und wird von einem Motor mit bevorzugt geringen Drehzahlen zu einer Drehbewegung um deren Längsachse angetrieben. Im Bereich der Matrize wird ein genügend hoher Staudruck aufgebaut, sodass durch das Drücken des Materials durch die Matrize ein festes Profil mit einem homogenen Gefüge entsteht. Soll ein halbfestes Profil hergestellt werden, ist eine Matrize nicht zwingend notwendig, da zur Herstellung eines halbfesten Profils nur ein geringer Staudruck notwendig ist.

Vorteilhaft ist es, wenn das Material kontinuierlich durch die Matrize gedrückt wird, um das Profil herzustellen. Die Matrize ist hierfür so ausgebildet, dass diese eine genügend hohe Härte zum Durchdrücken von Material aus einer Metalllegierung aufweist. Darüber hinaus wird die Matrize lösbar an einem Ende des Zylinders befestigt, wobei zur Befestigung insbesondere Schrauben aus Hochtemperatur-Werkzeugstahl verwendet werden. Eine Geometrie, insbesondere ein Querschnitt, des Profils wird durch eine Form der Matrize bestimmt. Das Profil wird beispielsweise mit einem rechteckigen, kreisförmigen oder ringförmigen Querschnitt hergestellt. Das hergestellte Profil kann anschließend weiterverarbeitet werden, insbesondere wird dieses weiter umgeformt oder einer anderen Legierung zugegeben.

Besonders zweckmäßig ist es, wenn die Metalllegierung und die kohlenstoffbasierten Zusatzstoffe mit zwei im Zylinder rotierenden Schneckenwellen bearbeitet und transportiert werden, wobei die Schneckenwellen insbesondere gleichlaufend angetrieben werden. Diese drehen sich dabei um deren jeweilige Längsachse. Die Verwendung von zwei Schneckenwellen gewährleistet eine gute Durchmischung der Materialbestandteile und es wird zudem eine für die Herstellung eines thixotropen Zustandes notwendige Scherung in das Material eingebracht. Dadurch wird ein Beimischen von verschiedenen kohlenstoffbasierten Zusatzstoffen direkt im Trichter ermöglicht. Die konisch ausgebildeten Schneckenwellen werden insbesondere gleichlaufend angetrieben, können jedoch auch gegenlaufend angetrieben werden. Konische Schneckenwellen weisen einen großen Achsenabstand auf, weshalb ein Drehmoment ohne Weiteres eingebracht werden kann. Ferner ist eine Scherung in Richtung eines Austragsbereiches aufgrund einer abnehmenden Schneckenumfangsgeschwindigkeit gering, weshalb auch scherempfindliche Rezepturen verwertet werden können. Gleichlaufend angetriebene Schneckenwellen reinigen sich selbst, da diese sich gegenseitig abstreifen. Darüber hinaus wird das Material durch die Schneckenwellen in Längsrichtung in einem offenen System transportiert, wobei Schneckengänge durchgehende Kanäle bilden. Ein Transport des Materials basiert hauptsächlich auf Schleppströmung, weshalb ein Durchsatz stark gegendruckabhängig ist.

Gleichlaufende Schneckenwellen können zum Plastifizieren, Mischen, Homogenisieren und Granulieren verwendet werden. Des Weiteren können damit teils mit regulären Mitteln unbenetzbare Additive wie Partikeln, Fasern und/oder Pigmenten dispergiert sowie Produkte mit unterschiedlicher Viskosität homogenisiert werden. Die Schneckenwellen werden von einem Antrieb mit niedrigen Drehzahlen angetrieben, um eine ausreichende Durchmischung und ein Aufbringen von Scherkräften sicherzustellen. Bei zu hohen Drehzahlen wird das Material nicht ausreichend durchmischt, sondern nur weitergeschoben. Eine Drehgeschwindigkeit der Schneckenwellen kann beispielsweise etwa 10 Umdrehungen/min bis 40 Umdrehungen/min, insbesondere 12 Umdrehungen/min bis 35 Umdrehungen/min, besonders bevorzugt 15 Umdrehungen/min bis 30 Umdrehungen/min, betragen. Die Drehgeschwindigkeit ist abhängig von einer Größe des Extruders. Eine Austrittsmasse des Profils aus dem Zylinder bzw. der Matrize des Extruders kann bei einer Herstellung eines festen Profils pro Zeiteinheit mindestens etwa 8 kg/h, insbesondere etwa mindestens 10 kg/h, besonders bevorzugt mindestens etwa 13 kg/h, und bei der Herstellung eines halbfesten Profils mindestens etwa 30 kg/h, insbesondere mindestens etwa 40 kg/h, besonders bevorzugt mindestens etwa 45 kg/h, betragen.

Günstig ist es, wenn das Material im Zylinder erwärmt und teilweise aufgeschmolzen wird. Dadurch werden die Zusatzstoffe und das teilweise geschmolzene Material benetzt. Zur Erwärmung können beispielsweise Heizmanschetten oder andere Heizelemente auf dem Zylinder angeordnet sein. Darüber hinaus können beispielsweise Isoliermatten auf den Zylinder gelegt werden, sodass ein Aufheizen beschleunigt und eine austretende Strahlungswärme minimiert wird. Insbesondere wird das Material durch die Temperatureinwirkung so teilweise aufgeschmolzen, dass dieses im teilflüssigen Zustand vorliegt. In weiterer Folge wird das Material unter Aufbringung von Scherkräften in Richtung der Matrize befördert und kontinuierlich durch die Matrize gedrückt, wodurch das Profil geformt wird. Durch die beim erfindungsgemäßen Verfahren auftretenden hohen Scherkräfte und erhöhten Temperaturen werden die die kohlenstoffbasierten Zusatzstoffe zusammen mit der Metalllegierung extrudiert, wobei ein Profil mit hoher Umformfähigkeit erzeugt wird. Ferner ist es günstig, wenn am Ende des Zylinders eine Kühlung vorgesehen ist, beispielsweise eine Luftkühlung, sodass das Material vor einem Durchtritt durch die Matrize abgekühlt wird. Mit einer Luftkühlung wird eine Brandgefahr so gering wie möglich gehalten.

Es ist von Vorteil, wenn das Profil durch einen vor einer Matrize vorgesehenen Schutzgasvorhang vor Oxidation geschützt wird. Nach einem Austritt aus dem Zylinder bzw. Durchtritt durch die Matrize ist das Profil noch heiß. Darüber hinaus kann auch vorgesehen sein, dass für mehrere Bestandteile des Extruders eine Schutzbegasung vorgesehen ist, sodass das Material bei der Herstellung des Profils durchgehend vor Oxidation geschützt wird.

Weitere Merkmale, Vorteile und Wirkungen ergeben sich aus dem nachfolgend dargestellten Ausführungsbeispiel. In der Zeichnung, auf welche dabei Bezug genommen wird, zeigt:

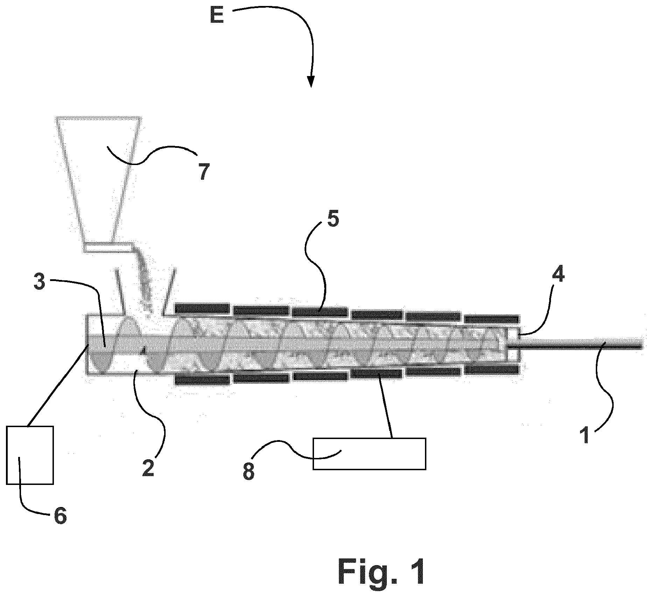

- Fig. 1: einen Extruder.

Fig. 1 zeigt einen Extruder E zur Durchführung eines erfindungsgemäßen Verfahrens. Der Extruder E ist zur Herstellung eines Profils 1 aus einer Metalllegierung ausgebildet und umfasst einen Zylinder 2, in welchem zumindest eine Schneckenwelle 3 angeordnet ist. Am Ende des Zylinders 2 ist eine Matrize 4 vorgesehen, durch welche ein Material aus einer Metalllegierung und kohlenstoffbasierten Zusatzstoffen wie Grafit oder Graphen gedrückt wird. Die Matrize 4 ist mit Schrauben aus Hochtemperatur-Werkzeugstahl lösbar am Zylinder 2 befestigt. Darüber hinaus ist eine Heizeinrichtung 5 vorgesehen, mit welcher das Material im Zylinder 2 erwärmt und teilweise aufgeschmolzen wird. Die Schneckenwelle 3 wird von einem Antrieb 6 angetrieben, welcher insbesondere als frequenzgeregelter Wechselstrommotor ausgebildet ist. Dieser treibt die Schneckenwelle 3 mit geringer Drehzahl an. Weiter umfasst der Extruder E einen Trichter 7 sowie einen Wärmetauscher 8 bzw. Wärmeübertrager, wobei der Wärmetauscher 8 insbesondere als Öl-Luft-Wärmetauscher ausgebildet ist.

Besonders bevorzugt sind zwei Schneckenwellen 3 vorgesehen, wodurch der Extruder E als sogenannter Zweischneckenextruder ausgebildet ist. Die Schneckenwellen 3 sind konisch ausgebildet und werden gleichlaufend oder gegenlaufend angetrieben, wobei die Schneckenwellen 3 im Zylinder 2 angeordnet sind. Für Wartungszwecke können die Schneckenwellen 3 aus dem Zylinder 2 entnommen werden. Die Verwendung von zwei Schneckenwellen 3 erlaubt eine gute Durchmischung des Materials sowie das Eindringen der notwendigen Scherung in dasselbe.

Bei einem erfindungsgemäßen Verfahren zur Herstellung eines Profils 1 aus einer Metalllegierung werden Späne aus einer Metalllegierung einen Extruder E zugeführt, wobei kohlenstoffbasierten Zusatzstoffe eingearbeitet werden. Die insbesondere als Partikel ausgebildeten kohlenstoffbasierten Zusatzstoffe werden insbesondere direkt in einem Trichter 7 mit den Spänen vermischt. Über den Trichter 7 wird das Material aus Spänen und Partikel in den Zylinder 2 geführt. Im Zylinder 2 sind insbesondere zwei Schneckenwellen 3 angeordnet, welche das Material durchmischen und eine notwendige Scherung einbringen. Das Material wird weiter über die Schneckenwellen 3 zu einer Matrize 4 transportiert. Der Zylinder 2 mit den Schneckenwellen 3 wird erwärmt, sodass das Material teilweise aufgeschmolzen wird und ein teilflüssiger Zustand vorliegt. Das vermischte und teilweise aufgeschmolzene Material wird unter Einwirkung von Scherkräften durch die Matrize 4 gedrückt, wodurch das Profil 1 hergestellt wird. Ein Querschnitt des Profils 1 wird durch eine Form der Matrize 2 bestimmt. Die Schneckenwellen 3 rotieren insbesondere gleichlaufend im Zylinder 2. Am Ausgang der Matrize 4 bzw. vor derselben ist ein Schutzgasvorhang vorgesehen, um das am Austrittspunkt noch heiße Profil 1 vor Oxidation zu schützen. Durch das erfindungsgemäße Verfahren ist ein festes oder halbfestes Profil 1 herstellbar, abhängig davon, wie hoch die Festphasenanteile sind. Das Profil 1 wird anschließend weiter umgeformt oder als Zusatz für weitere Werkstoffgruppen verwendet.

Es kann auch vorgesehen sein, dass der Extruder E ohne Matrize 4 ausgebildet ist. Dabei wird der Staudruck an einem anderen Ort des Extruders E aufgebaut. Folglich kann das Material in einem halbfesten Zustand aus dem Extruder E entnommen und als Vormaterial weiterverwendet werden.

## Patentansprüche

1. Verfahren zur Herstellung eines Profils (1) aus einer Metalllegierung, wobei die Metalllegierung im teilflüssigen Zustand verarbeitet wird, **dadurch gekennzeichnet, dass** die insbesondere in Form von Spänen vorliegende Metalllegierung mit einem Extruder (E) kontinuierlich extrudiert wird, wobei kohlenstoffbasierte Zusatzstoffe eingearbeitet werden.

2. Verfahren nach Anspruch 1, **dadurch gekennzeichnet, dass** die Metalllegierung und die kohlenstoffbasierten Zusatzstoffe durch zumindest eine in einem Zylinder (2) angeordnete Schneckenwelle (3) bearbeitet werden, wobei ein entstehendes teilflüssiges Material über die zumindest eine Schneckenwelle (3) zu einer Matrize (4) transportiert wird.

3. Verfahren nach Anspruch 2, **dadurch gekennzeichnet, dass** das Material kontinuierlich durch die Matrize (4) gedrückt wird, um das Profil (1) herzustellen.

4. Verfahren nach Anspruch 2 oder 3, **dadurch gekennzeichnet, dass** die Metalllegierung und die kohlenstoffbasierten Zusatzstoffe mit zwei im Zylinder (2) rotierenden Schneckenwellen (3) bearbeitet und transportiert werden, wobei die Schneckenwellen (3) insbesondere gleichlaufend angetrieben werden.

5. Verfahren nach einem der Ansprüche 2 bis 4, **dadurch gekennzeichnet, dass** das Material im Zylinder (2) erwärmt und teilweise aufgeschmolzen wird.

6. Verfahren nach einem der Ansprüche 1 bis 5, **dadurch gekennzeichnet, dass** das Profil (1) durch einen vor einer Matrize (4) vorgesehenen Schutzgasvorhang vor Oxidation geschützt wird.
